# EUROPÄISCHE PATENTSCHRIFT

(11) **EP 3 630 571 B1**
(45) Veröffentlichungstag und Bekanntmachung des Hinweises auf die Patenterteilung: **16.12.2020**
(21) Anmeldenummer: 18728147.2
(22) Anmeldetag: 30.05.2018
(51) Int. Cl.: B61B 12/00

(54) **SEILGEZOGENE BEFÖRDERUNGSEINRICHTUNG UND VERFAHREN ZUM BETREIBEN EINER SOLCHEN**
CABLE-DRAWN CONVEYING DEVICE AND METHOD FOR OPERATING SUCH A DEVICE
SYSTÈME DE TRANSPORT À TRACTION PAR CÂBLE ET PROCÉDÉ POUR FAIRE FONCTIONNER CE SYSTÈME

(30) Priorität: 02.06.2017 AT 504642017
(43) Veröffentlichungstag der Anmeldung: 08.04.2020
(73) Patentinhaber: Innova Patent GmbH, 6922 Wolfurt (AT)
(72) Erfinder: HEINZLE, Florian, 6840 Götzis (AT); KOHLER, Christof, 6850 Dornbirn (AT)
(74) Vertreter: Patentanwälte Pinter & Weiss OG
(86) Internationale Anmeldenummer: PCT/EP2018/064194
(87) Internationale Veröffentlichungsnummer: WO 2018/220016

(56) Entgegenhaltungen:
- EP-A1- 1 992 539
- EP-A1- 2 623 389
- WO-A2-2011/003812
- CH-A1- 701 450

## Beschreibung

Die gegenständliche Erfindung betrifft eine Beförderungseinrichtung mit zumindest einem Fahrzeug, das mit einem angetriebenen Seil der Beförderungseinrichtung gekoppelt ist, um das Fahrzeug zwischen einer ersten Station und einer zweiten Station zu befördern, wobei am Fahrzeug zumindest ein Generator vorgesehen ist, der während der Bewegung des Fahrzeuges elektrische Energie zum Versorgen von elektrischen Verbrauchern des Fahrzeuges erzeugt. Ferner betrifft die Erfindung ein Verfahren zum Betreiben einer solchen Beförderungseinrichtung.

Es sind Beförderungseinrichtungen zum Befördern von Personen oder Gegenständen bekannt, bei denen ein Fahrzeug der Beförderungseinrichtung antriebslos ist. Das Fahrzeug wird dabei von einem externen, stationären Antrieb angetrieben. Oftmals sind diese als seilgezogene Beförderungseinrichtungen ausgeführt, bei denen das Fahrzeug an ein umlaufendes Seil fix geklemmt ist oder gekoppelt wird und mit dem Seil bewegt wird. Beispiele solcher Beförderungseinrichtungen sind Standseilbahnen, Pendelbahnen (Seilschwebebahn) oder Schienenseilbahnen (oftmals auch People Mover oder Cable Liner bezeichnet). Solche Anlagen können einspurig oder auch mehrspurig ausgeführt sein und es können ein oder mehrere Fahrzeuge (auch auf einem einzigen Fahrweg) gleichzeitig bewegt werden. Die Fahrzeuge werden zwischen zwei Stationen entweder im Umlaufbetrieb oder im Pendelbetrieb geführt.

An Fahrzeugen moderner Beförderungseinrichtungen sind eine Anzahl von elektrischen Verbrauchern angeordnet, insbesondere in Beförderungseinrichtung für Personen. Ein Fahrzeug muss daher eine elektrische Energieversorgung aufweisen, um die elektrischen Verbraucher mit elektrischer Energie zu versorgen. In den Stationen, in denen die Fahrzeuge in der Regel stillstehen oder nur sehr langsam bewegt werden, kann die elektrische Energieversorgung sehr einfach von extern realisiert werden, beispielsweise über Stromschienen oder Oberleitungen, über elektrische Kontakte die geschlossen werden, aber auch berührungslos, wie z.B. induktiv. Derartige Beförderungseinrichtungen werden jedoch in der Regel über sehr lange Strecken geführt, weshalb es in der Praxis oftmals schwierig ist, die Energieversorgung der Fahrzeuge auf der Strecke sicherzustellen.

Denkbar sind hierfür leistungsfähige, elektrische Energiespeicher am Fahrzeug. Diese müssten aber entsprechend dimensioniert werden, was zu großen, schweren Energiespeichern führt. Gleichfalls ist es aufwendig, die Energiespeicher in den Stationen aufzuladen, da hierfür sehr hohe elektrische Ströme und Leistungen notwendig wären.

Zur Energieversorgung eines Fahrzeugs einer derartigen Beförderungseinrichtung sind daher oftmals auch Stromschienen oder Oberleitungen entlang des gesamten Fahrweges des Fahrzeugs vorgesehen. Das Fahrzeug ist mit einem geeigneten Stromabnehmer in Kontakt mit der Stromschiene oder Oberleitung und erhält darüber die benötigte elektrische Energie. Damit könnte auf Energiespeicher am Fahrzeug gänzlich verzichtet werden, oder nur kleine Energiespeicher zur Notversorgung des Fahrzeugs im Falle von Störungen vorgesehen sein. Solche Stromschienen oder Oberleitungen sind jedoch installationsaufwendig und benötigen aufgrund des hohen Verschleißes zwischen Stromschienen oder Oberleitungen und Stromabnehmer auch regelmäßige Wartung. Abgesehen davon besteht bei Stromschienen oder Oberleitungen auch immer die Gefahr von Entgleisungen des Stromabnehmers und von Stromschlägen oder Erdschlüssen, weshalb derartige Ausführungen auch störungsanfällig sind und hohe Anforderungen an die Betriebssicherheit stellen.

Ebenso ist es bekannt, an einem Fahrzeug solcher Beförderungseinrichtungen einen Generator anzuordnen, der mit einem Laufrad des Fahrzeugs in Wirkverbindung steht, um durch die Bewegung des Laufrades elektrischen Strom zu erzeugen. Beispiele hierfür finden sich in der EP 1 992 539 B1 oder EP 2 623 389 B1. Damit steigt zwar der Aufwand für das Fahrzeug, dieses kann aber dafür die benötigte elektrische Energie für seine elektrischen Verbraucher selbst erzeugen. Auf einen elektrischen Energiespeicher am Fahrzeug zur Versorgung der elektrischen Verbraucher kann dabei verzichtet werden, oder es ist lediglich ein kleiner Energiespeicher zur Notversorgung des Fahrzeugs vorzusehen. Diese Lösung ist dabei insbesondere für Beförderungseinrichtungen geeignet, in denen das Fahrzeug kontinuierlich über lange Strecken bewegt wird, also z.B. wie bei einer Seilschwebebahn oder Standseilbahn, was eine kontinuierliche elektrische Energieversorgung ermöglicht. Bei oftmaligen Stopps des Fahrzeugs oder bei kürzeren Strecken, wie das oftmals bei Schienenseilbahnen der Fall ist, ist dies Lösung allerdings nur bedingt brauchbar, da der Generator am Fahrzeug natürlich nur bei Bewegung des Fahrzeugs elektrische Energie erzeugen kann. Es ist daher eine Aufgabe der gegenständlichen Erfindung, eine Beförderungseinrichtung, und ein Verfahren zum Betreiben einer Beförderungseinrichtung, anzugeben, die mit einfachen technischen Mitteln immer eine ausreichende elektrische Energieversorgung eines Fahrzeugs der Beförderungseinrichtung sicherstellt.

Diese Aufgabe wird für das Verfahren gelöst, indem die elektrischen Verbraucher des Fahrzeuges außerhalb der ersten Station während einer ersten Bewegungsphase, in der das Fahrzeug aus der Station auf eine Grenzgeschwindigkeit beschleunigt oder umgekehrt von einer Grenzgeschwindigkeit in die Station verzögert wird, von einem elektrischen Energiespeicher des Fahrzeugs oder gemeinsam von einem elektrischen Energiespeicher und vom Generator versorgt wird und das Fahrzeug in einer folgenden bzw. vorherigen zweiten Bewegungsphase während der Bewegung mit einer Geschwindigkeit größer der Grenzgeschwindigkeit vom Generator allein mit elektrischer Energie versorgt wird. Die Beförderungseinrichtung zeichnet sich dadurch aus, dass am Fahrzeug ein elektrischer Energiespeicher vorgesehen ist und der elektrische Energiespeicher oder der elektrische Energiespeicher gemeinsam mit dem Generator die elektrischen Verbraucher der Fahrzeugs mit elektrischer Energie versorgt während das Fahrzeug aus der Station auf eine Grenzgeschwindigkeit beschleunigt oder umgekehrt von einer Grenzgeschwindigkeit in eine Station verzögert und der Generator allein die elektrischen Verbraucher des Fahrzeugs während der Bewegung mit einer Geschwindigkeit größer der Grenzgeschwindigkeit mit elektrischer Energie versorgt.

Damit kann auf bisher übliche, störungsanfällige Stromschienen oder Oberleitungen zur Energieversorgung eines Fahrzeugs der Beförderungseinrichtung außerhalb der Stationen verzichtet werden. Es ist aber auch nicht notwendig, große elektrische Energiespeicher vorzusehen, um die Energieversorgung zwischen den Stationen sicherzustellen. Hierzu dient der Generator am Fahrzeug. Um auch die mit einem Generator vorliegende Versorgungslücke zu schließen, ist am Fahrzeug ein elektrischer Energiespeicher vorgesehen, mit dem die Verbraucher mit elektrischer Energie versorgt werden, bis der Generator das alleine übernehmen kann. Dieser Energiespeicher kann damit kleiner dimensioniert werden, da dieser nicht während der gesamten Bewegung des Fahrzeugs benötigt wird.

Vorzugsweise wird ein Generator verwendet, der in beide Richtungen verwendet werden kann, da damit die Beförderungseinrichtung im Pendelbetrieb betrieben werden kann. Wenn der elektrische Energiespeicher am Fahrzeug in der ersten Station von einer durch die Station elektrisch versorgten Ladeeinrichtung geladen wird, kann der Generator kleiner dimensioniert werden, da dieser nicht, oder zumindest nur in geringerem Ausmaß, das Laden des Energiespeichers übernehmen muss. Aufgrund des von Haus kleineren Energiespeichers wird auch für das Laden des elektrischen Energiespeichers damit weniger Leistung benötigt, was auch die Ladeeinrichtung in der Station vereinfacht.

Um überschüssige elektrische Energie des Generators nutzen zu können ist vorteilhafterweise vorgesehen, dass der elektrische Energiespeicher am Fahrzeug während der zweiten Bewegungsphase vom Generator geladen wird.

Die Belastung des Energiespeichers kann reduziert werden, wenn zumindest ein elektrischer Verbraucher des Fahrzeugs während des Aufenthalts des Fahrzeugs in einer Station und/oder während der ersten Bewegungsphase ganz oder teilweise abgeschaltet wird. Wenn zumindest ein elektrischer Verbraucher des Fahrzeugs nur über den Generator mit elektrischer Energie versorgt wird, können insbesondere solche Verbraucher, deren kurzzeitiger Ausfall tolerierbar ist, und bevorzugt Verbraucher mit sehr hohem Energiebedarf, nur über den Generator versorgt werden, um die Belastung des Energiespeichers zu reduzieren. Wenn zumindest zwei miteinander gekoppelte Fahrzeuge bewegt werden ist es vorteilhaft, wenn zumindest ein Verbraucher eines der beiden Fahrzeuge vom anderen Fahrzeug mit elektrischer Energie versorgt, wenn die Energieversorgung eines Fahrzeugs ausfällt. Auf diese Weise kann der Betrieb der Beförderungseinrichtung, zumindest eingeschränkt, aufrecht erhalten werden, wenn an einem Fahrzeug ein Fehler, insbesondere des Energiespeichers oder des Generators, auftritt.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
- Fig.1: eine erfindungsgemäße Beförderungseinrichtung,
- Fig.2: ein Fahrzeug der Beförderungseinrichtung in einer Station mit Ladeeinrichtung,
- Fig.3: die Funktionsweise der Beförderungseinrichtung und
- Fig.4: eine elektrisches Schaltungsschema eines Fahrzeugs der Beförderungseinrichtung.

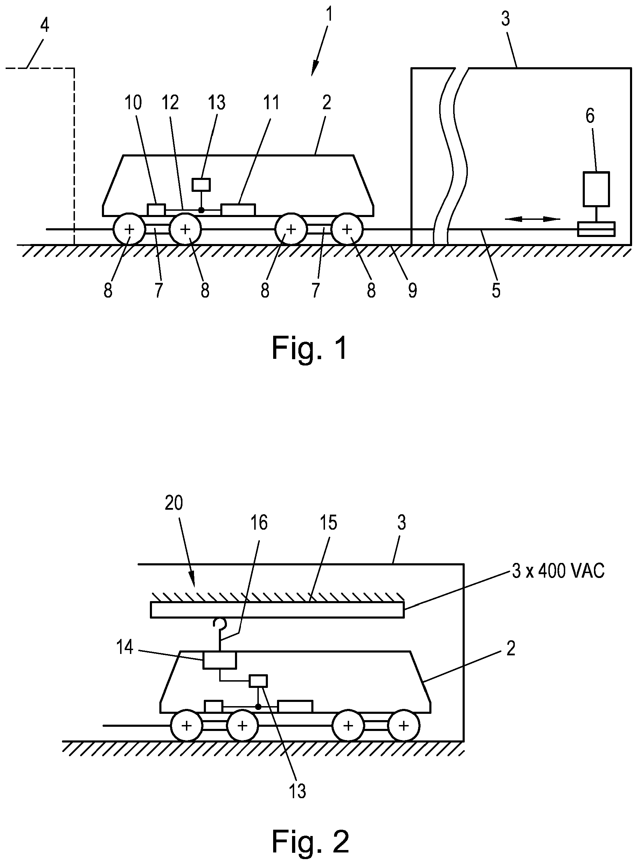

In Fig.1 ist schematisch eine seilgezogene Beförderungseinrichtung 1 in Form einer Schienenseilbahn zur Personenbeförderung dargestellt. Die Beförderungseinrichtung 1 umfasst zumindest ein Fahrzeug 2, das zwischen einer ersten Station 3 und einer (in Fig.1 nur angedeuteten zweiten Station 4) hin und her bewegt wird. Das Fahrzeug 2 ist hierzu an ein angetriebenes Seil 5 gekoppelt (entweder fix geklemmt oder lösbar gekoppelt) und das Seil 5 ist durch einen angedeuteten Seilantrieb 6, beispielsweise ein Elektromotor, zum Bewegen des Fahrzeugs 2 angetrieben. Beispielsweise läuft das Seil zwischen der ersten Station 3 und der zweiten Station 4 um und die Bewegungsrichtung des Fahrzeugs 2 wird durch die Umlaufrichtung des Seiles 5 bestimmt. Am Fahrzeug 2 ist eine Anzahl von Laufrädern 8 angeordnet, die auf einem stationären Fahrweg 9 abrollen. Die Laufräder 8 sind vorzugsweise auf zumindest einem Fahrwerk 7 des Fahrzeugs 2 angeordnet. Solche Beförderungseinrichtungen 1 sind hinlänglich bekannt, weshalb hier nicht näher darauf eingegangen wird.

Zur elektrischen Energieversorgung des Fahrzeugs 2 ist am Fahrzeug 2 zumindest ein elektrischer Generator 10 vorgesehen, der während der Bewegung des Fahrzeugs 2 die für die elektrischen Verbraucher 11 des Fahrzeugs 2 benötigte elektrische Energie erzeugt. Typische elektrische Verbraucher 11 sind hierbei Steuerungseinrichtungen für Türen, Sicherheits- und Überwachungseinrichtungen, Radio, Entertainmentsysteme (Bildschirme), Klimaanlage, Heizung, Beleuchtung, Lüfter, usw. Ein Fahrzeug 2 verbraucht damit einen relativ hohen elektrischen Strom, typischerweise aus einem elektrischen Bordnetz 12, in der Regel 12V oder 24V Gleichspannung.

Der Generator 10 erzeugt elektrische Energie aus einer Relativbewegung zwischen dem Fahrzeug 2 und dem Fahrweg 9. Hierzu sind natürlich verschiedene Ausgestaltungen möglich, was aber für die Erfindung nebensächlich ist. Beispielsweise könnte an zumindest einem Laufrad 8 ein Radnabengenerator vorgesehen sein. Ebenso könnte am Fahrzeug 2 ein Reibrad vorgesehen sein, das entweder an einem Laufrad 8 oder am Fahrweg 9 abrollt und das den Generator 10 antreibt. Dabei kann zwischen Reibrad und Generator 10 natürlich auch ein Getriebe beliebiger Bauart vorgesehen sein, beispielsweise ein form- oder kraftschlüssiges oder hydraulisches Getriebe, um den Generator 10 über das Reibrad indirekt anzutreiben. Es können natürlich auch mehrere Generatoren 10 am Fahrzeug vorgesehen sein, um einerseits die Baugröße klein zu halten und andererseits die benötigte elektrische Energie zur Verfügung stellen zu können. Es können mehrere Generatoren 10 aber auch zwecks Redundanz eingesetzt werden, um bei Ausfall eines Generators 10 die Versorgung über einen anderen Generator 10 sicherzustellen.

Ganz besonders vorteilhaft ist ein Generator 10 vorgesehen, der in beiden Richtungen betreibbar ist, was es ermöglicht die Beförderungseinrichtung 1 im Pendelbetrieb zu betreiben, bei dem das Fahrzeug 2 zwischen den Stationen 3, 4 am selben Fahrweg 9 hin und her bewegt wird.

Ein Generator 10 erzeugt erst ab einer bestimmten Geschwindigkeit des Fahrzeugs 2 ausreichend elektrische Energie, um die Verbraucher 11 zu versorgen. Diese Grenzgeschwindigkeit hängt insbesondere von der Bauart des Generators 10 und von der Ausgestaltung des Antriebs des Generators 10 ab, kann aber als bekannt vorausgesetzt werden.

Am Fahrzeug 2 ist auch zumindest ein elektrischer Energiespeicher 13 angeordnet, der ebenfalls mit dem elektrischen Bordnetz 12 verbunden ist. Der elektrische Energiespeicher 13 ist dabei derart ausgelegt, dass damit die elektrischen Verbraucher 11 im Wesentlichen mit elektrischer Energie versorgt werden können. Der elektrische Energiespeicher 13 gewährleistet damit eine elektrische Versorgung, die über eine reine Notversorgung des Fahrzeugs 2, bei der nur die notwendigsten elektrischen Verbraucher 11 versorgt werden, hinausgeht. Für eine Notversorgung werden in der Regel nur sicherheitsrelevante elektrische Verbraucher 11, wie beispielsweise Kommunikations-, Sicherheits-, Steuer- und Überwachungseinrichtungen, versorgt, während andere Verbraucher 11, wie beispielsweise Heizung, Lüftung, Klima, Licht, Entertainment, etc., weggeschaltet werden. Mit dem elektrischen Energiespeicher 13 sollen aber insbesondere auch diese Verbraucher 11 mit elektrischer Energie versorgt werden können. Es könnte aber auch vorgesehen sein, dass bestimmte Verbraucher 11', insbesondere solche deren kurzzeitiger Ausfall tolerierbar ist, bevorzugt Verbraucher mit besonders hohem Energieverbrauch, wie beispielsweise eine Klimaanlage oder eine elektrische Heizung, generell nicht vom elektrischen Energiespeicher 13 versorgt werden, sondern nur vom Generator 10..

In zumindest einer Station 3, 4 kann auch eine Ladeeinrichtung 20 vorgesehen sein, mit der der elektrische Energiespeicher 13 des Fahrzeuges 2 geladen werden kann, wie anhand der Fig.2 erläutert wird. Die Ladeeinrichtung 20 wird in der Station 3 mit dem elektrischen Energiespeicher 13 verbunden, um diesen zu laden. Die Ladeeinrichtung 20 kann dazu natürlich unterschiedlich ausgestaltet sein. Im einfachsten Fall wird der elektrische Energiespeicher 13 über einen elektrischen Kontakt direkt mit einer geeigneten Ladespannung verbunden. Es könnte zwischen der Station 3 und dem Fahrzeug 2 zum Laden aber auch eine berührungslose Energieübertragung, beispielsweise eine induktive Energieübertragung, vorgesehen sein. Nachdem aber in der Regel der Stationsaufenthalt des Fahrzeugs 2 nur kurz ist, ist auch die verfügbare Zeit zum Laden des elektrischen Energiespeichers 13 beschränkt. Zum Laden werden daher oftmals sehr hohe Leistungsdichten benötigt, weshalb eine leistungsfähige Ladeeinrichtung 20, beispielsweise wie in Fig.2 dargestellt, vorteilhaft ist.

In der Station 3, in der geladen werden soll, ist in der gezeigten Ausgestaltung der Fig.2 ein stationärer Leiter 15, beispielsweise eine Stromschiene oder eine Oberleitung, auch mehrphasig, vorgesehen, der an eine externe Stromversorgung, beispielsweise 3x400V oder 3x690V Wechselspannung, angeschlossen ist. Am Fahrzeug 2 ist ein Stromabnehmer 16 vorgesehen, der beim Einfahren des Fahrzeugs 2 in die Station 3 den stationären Leiter 15 kontaktiert. Die vom stationären Leiter 15 abgenommene Spannung wird über ein Ladegerät 14 der Ladeinrichtung 20, beispielsweise in Form eines Gleichrichters zum Gleichrichten der Versorgungsspannung auf die Batteriespannung, zum Laden mit dem elektrischen Energiespeicher 13 verbunden.

Wenn der Generator 10 ausreichend leistungsfähig ist, dann könnte auf die Ladeeinrichtung 20 in der Station 3 auch verzichtet werden. In diesem Fall könnte der elektrische Energiespeicher 13 über den Generator 10 geladen werden, was dann nur während der Bewegung des Fahrzeugs 2 erfolgen kann. Dazu ist natürlich auch der elektrische Energiespeicher 13 entsprechend zu dimensionieren, da die Versorgung der Verbraucher 11 des Fahrzeugs 2 in der Station 3 dann ebenfalls über den elektrischen Energiespeicher 13 erfolgen müsste. Dafür könnte auf einen stationären Leiter 15 in der Station 3 und auf dessen externe Stromversorgung verzichtet werden.

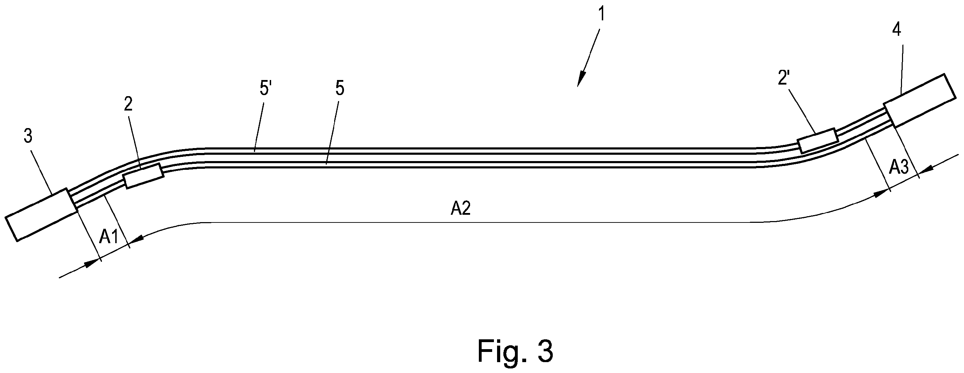

Die Funktionsweise der Beförderungseinrichtung 1 wird nun mit Bezugnahme auf die Fig.3 erläutert. Die Beförderungseinrichtung 1 ist hierbei eine zweispurige seilgezogene Beförderungseinrichtung 1, wobei auf jeder Spur ein Fahrzeug 2, 2' wie beschrieben durch ein zugeordnetes Seil 5, 5' bewegt wird. Die Fahrzeuge 2, 2' sind beispielsweise gegengleich im Pendelbetrieb unterwegs, was mit einem in beide Richtungen betreibbaren Generator 10 möglich ist. Die Funktionsweise wird nachfolgend ohne Einschränkung der Allgemeinheit nur bezüglich des Fahrzeugs 2 erläutert.

In einer ersten Station 3 werden die elektrischen Verbraucher 11 des Fahrzeuges 2 vom elektrischen Energiespeicher 13 versorgt. Optional wird der elektrische Energiespeicher 13 in der Station 3 mittels einer Ladeeinrichtung 20 geladen, beispielsweise indem der elektrische Energiespeicher 13 in der Station 3 mit einem stationären Leiter 15 verbunden wird. Dabei steht das Fahrzeug 2 in der Station 3 vorzugsweise still, beispielsweise um Personen zu- oder aussteigen zu lassen. Das Fahrzeug 2 kann aber auch mit einer sehr niedrigen Geschwindigkeit durch die Station 3 bewegt werden, sodass noch ein Zu- oder Aussteigen möglich ist. Beim Ausfahren des Fahrzeugs 2 aus der Station 3 muss das Fahrzeug 2 auf eine gewünschte Fördergeschwindigkeit beschleunigt werden. Damit gibt es nach der Station 3 einen Streckenabschnitt A1 entlang dem das Fahrzeug 2 beschleunigt wird, der elektrische Energiespeicher 13 des Fahrzeuges 2 aber (falls vorgesehen) nicht mehr geladen wird. Während dieser ersten Bewegungsphase kann das Fahrzeug 2 nicht alleine vom elektrischen Generator 10 versorgt werden, weil die benötigte Relativgeschwindigkeit zwischen Fahrzeug 2 und Fahrweg 9, und damit auch die Drehzahl des Generators 10, noch zu gering ist. Erst ab einer bestimmten Grenzgeschwindigkeit erzeugt der Generator 10 die benötigte elektrische Energie zum alleinigen Versorgen der elektrischen Verbraucher 11 des Fahrzeuges 2. Diese Grenzgeschwindigkeit muss aber natürlich nicht die Fördergeschwindigkeit sein, mit der das Fahrzeug 2 zwischen den Stationen 3, 4 bewegt wird. Entlang des Streckenabschnittes A1 kann somit eine gemeinsame Versorgung der Verbraucher 11 durch den elektrischen Energiespeicher 13 und den Generator 10 erfolgen, wobei der Anteil des Generators 10 während der Beschleunigung des Fahrzeugs kontinuierlich von 0 auf 100% ansteigt. Es kann aber auch vorgesehen sein, dass die Energieversorgung vom elektrischen Energiespeicher 13 auf den Generator 10 umgeschaltet wird, wenn der Generator 10 die benötigte Energie liefern kann. In der der ersten Bewegungsphase folgenden zweiten Bewegungsphase legt das Fahrzeug 2 den Streckenabschnitt A2 zurück und das Fahrzeug 2 wird dabei alleine vom zumindest einen Generator 10 am Fahrzeug 2 mit elektrischer Energie versorgt.

In der ersten Bewegungsphase könnte auch vorgesehen sein, bestimmte Verbraucher 11 erst dann zuzuschalten oder schrittweise zuzuschalten, wenn der Anteil des Generators 10 ausreichend groß ist, um die Belastung des elektrischen Energiespeichers 13 zu begrenzen. Damit können Verbraucher 11 mit hohem Energiebedarf z.B. erst gegen Ende der ersten Bewegungsphase zugeschaltet werden, während andere sofort mit elektrischer Energie versorgt werden.

Bei der Annäherung an die nächste Station 4 wird das Fahrzeug 2 verzögert, sodass ab einer bestimmten Geschwindigkeit die elektrische Versorgung nicht mehr alleine vom Generator 10 erfolgen kann. In diesem Streckenabschnitt A3 vor der Station 4 erfolgt damit in einer dritten Bewegungsphase, die im Wesentlichen der ersten Bewegungsphase entspricht, die elektrische Versorgung der Verbraucher 11 wieder gemeinsam über den elektrischen Energiespeicher 13 und den Generator 10 oder nur durch den elektrischen Energiespeicher 13, bis das Fahrzeug 2 in die Station 4 eingefahren ist. Für die dritte Bewegungsphase gilt im Wesentlichen dasselbe wie oben für die erste Bewegungsphase bereits ausgeführt. Auch in der Station 4 könnte der elektrische Energiespeicher 13 wie beschrieben geladen werden.

Natürlich könnten in der Beförderungseinrichtung 1 auch mehr als zwei Station 3, 4 vorgesehen sein, was aber an der grundsätzlichen Betriebsweise nichts ändert.

Es kann auch vorgesehen sein, dass das Fahrzeug 2 in der Station 4, insbesondere wenn es sich um eine Zwischenstation handelt, nicht angehalten wird, sondern mit langsamer Geschwindigkeit durch die Station 4 bewegt wird. In diesem Fall könnte die elektrische Versorgung des Fahrzeugs 2 ebenfalls mit dem elektrischen Energiespeicher 13 erfolgen. Es könnte aber auch ein stationärer Leiter 15 vorgesehen sein, der sich vor und hinter der Station 4 aus der Station heraus erstreckt, sodass die elektrische Versorgung im Bereich der Zwischenstation über den stationären Leiter 15 erfolgt. Dabei könnte natürlich der elektrische Energiespeicher 13 auch wieder geladen werden.

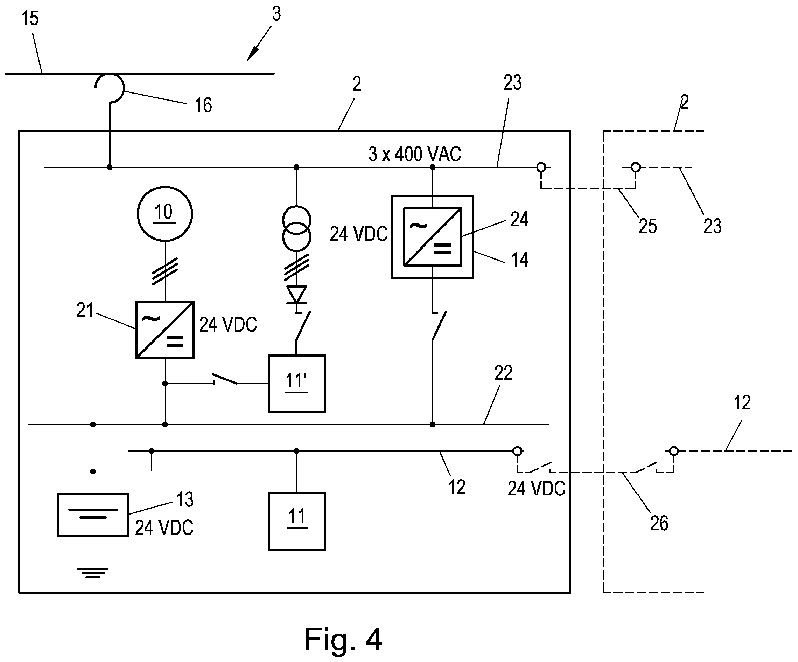

Eine beispielhafte elektrische Beschaltung im Fahrzeug 2 ist in Fig.4 dargestellt. Am Bordnetz 12, hier z.B. 24VDC, hängen die elektrischen Verbraucher 11 des Fahrzeugs 2. Am Bordnetz 12 ist auch der elektrische Energiespeicher 13 angeschlossen. Das Bordnetz 12 ist außerdem mit dem elektrischen Generator 10 verbunden, beispielsweise über einen Umrichter 21. Im Betrieb des Fahrzeugs 2 entlang des Streckenabschnittes A2 erzeugt der Generator 10 elektrische Energie, die in das Bordnetz 12 zum Versorgen der elektrischen Verbraucher 11 fließt. Überflüssige Energie kann zum Laden des elektrischen Energiespeichers 13 verwendet werden. Im dargestellten Ausführungsbeispiel ist ein Zwischenbus 22 vorgesehen, der mit dem Bordnetz 12 verbunden ist. Der Generator 10 speist in den Zwischenbus 22. Im Streckenabschnitt A1 erfolgt bei dieser Ausführung die Energieversorgung über den elektrischen Energiespeicher 13 und den Generator 10 gemeinsam, indem beide in das Bordnetz 12 einspeisen. Je geringer die Drehzahl des Generators 10 desto geringer ist die Ausgangsspannung am Umrichter 21 des Generators 10. Wenn die Ausgangsspannung am Umrichter 21 des Generators 10 geringer ist als die Spannung des elektrischen Energiespeichers 13, dann übernimmt der elektrische Energiespeicher 13 automatisch einen Teil der Versorgung der Verbraucher 11 mit.

In der Station 3 ist ein stationärer Leiter 15 vorgesehen, der vom Fahrzeug 2 kontaktiert wird, z.B. über einen Stromabnehmer 16. Im Fahrzeug ist ein Versorgungsnetz 23 vorgesehen, das vom stationären Leiter 15 über den Stromabnehmer gespeist wird und das im Fahrzeug 2 eine Versorgungsspannung zur Verfügung stellt, beispielsweise 3 x 400V. Die gegebenenfalls notwendige Umwandlung der vom stationären Leiter 15 abgenommenen Spannung in die Versorgungsspannung im Fahrzeug 2 ist hinlänglich bekannt und ist in Fig.4 nicht dargestellt. Aus dem Versorgungsnetz 23 wird über ein Ladegerät 14, hier ein Gleichrichter 24 das Bordnetz 12 zum Versorgen der elektrischen Verbraucher 11 und zum Laden des elektrischen Energiespeichers 13 gespeist, hier über den Zwischenbus 22.

Es können auch elektrische Verbraucher 11' vorgesehen sein, die nicht direkt vom elektrischen Energiespeicher 13 versorgt werden, sondern entweder vom Generator 10 oder aus dem Versorgungsnetz 23, je nachdem ob sich das Fahrzeug 2 in der Station 3 oder auf dem Streckenabschnitt A2 befindet. Das ist aber nur bei Verbrauchern 11' möglich, bei denen es keine negativen Auswirkungen gibt (insbesondere hinsichtlich der Sicherheit) wenn die Energieversorgung kurz ausfällt und die den vielen EIN / AUS Zyklen standhalten. Auf dem Streckenabschnitt A1, der in der Regel aber nur sehr kurz ist, wären solche Verbraucher 11' nicht mit elektrischer Energie versorgt. Ein typischer Verbraucher 11', der so betrieben werden könnten wäre eine elektrische Heizung, die zwar viel elektrische Energie benötigt, wo es aber keine negativen Auswirkungen hat, wenn deren Energieversorgung kurz und oftmals ausfällt.

Durch die Beförderungseinrichtung 1 könnte auch ein Zug, aus mehreren separaten, miteinander gekoppelten Fahrzeugen 2 bewegt werden (angedeutet in Fig.4). In diesem Fall könnte das Versorgungsnetz 23 durch alle Fahrzeuge 2 des Zuges geführt sein, beispielsweise mittels geeigneter elektrischer Verbindungen 25 zwischen den Fahrzeugen (angedeutet in Fig.4). Dabei müsste nur an einem Fahrzeug 2 ein Stromabnehmer 16 vorgesehen sein. Im Normalbetrieb wird jedes Fahrzeug 2 wie oben beschreiben mit elektrischer Energie versorgt. Bei Ausfall des Bordnetzes 12 eines Fahrzeugs 2, beispielsweise durch defekten elektrischen Energiespeicher 13 oder defekten Generator 10, könnten alle Verbraucher 11 dieses Fahrzeugs 2 ausfallen. Um das zu verhindern, kann zwischen zwei Fahrzeugen 2 des Zuges ein elektrischer Hilfsversorgungsbus 26 (angedeutet in Fig.4) vorgesehen, der im Fehlerfall die Bordnetze 12 der beiden Fahrzeuge 2 verbindet, z.B. über Schalter. Damit können zumindest die sicherheitsrelevanten Verbraucher des defekten Fahrzeugs 2 über das andere Fahrzeug 2 weiterhin mit elektrischer Energie versorgt werden.

## Patentansprüche

1. Verfahren zum Betreiben einer seilgezogenen Beförderungseinrichtung (1) mit der zumindest ein, mit einem angetriebenen Seil (5) der Beförderungseinrichtung (1) gekoppeltes, Fahrzeug (2) zwischen einer ersten Station (3) und einer zweiten Station (4) bewegt wird, wobei am Fahrzeug (2) zumindest ein Generator (10) angeordnet ist, der während der Bewegung des Fahrzeuges (2) elektrische Energie zum Versorgen von elektrischen Verbrauchern (11, 11') des Fahrzeuges (2) erzeugt, **dadurch gekennzeichnet, dass** die elektrischen Verbraucher (11) des Fahrzeuges (2) außerhalb einer Station (3, 4) während einer ersten Bewegungsphase (A1, A3), in der das Fahrzeug (2) aus der Station (3, 4) auf eine Grenzgeschwindigkeit beschleunigt oder umgekehrt von einer Grenzgeschwindigkeit in die Station (3, 4) verzögert wird, von einem elektrischen Energiespeicher (13) des Fahrzeugs (2) oder gemeinsam von einem elektrischen Energiespeicher (13) des Fahrzeugs (2) und vom Generator (10) versorgt werden **und dass** die elektrischen Verbraucher (11) des Fahrzeuges (2) in einer folgenden bzw. in einer vorherigen zweiten Bewegungsphase (A2) während der Bewegung des Fahrzeugs (2) mit einer Geschwindigkeit größer der Grenzgeschwindigkeit vom Generator (10) allein mit elektrischer Energie versorgt werden.

2. Verfahren nach Anspruch 1, **dadurch gekennzeichnet, dass** der elektrische Energiespeicher (13) am Fahrzeug (2) in einer Station (3, 4) von einer durch die Station (3, 4) elektrisch versorgten Ladeeinrichtung (20) geladen wird.

3. Verfahren nach Anspruch 1 oder 2, **dadurch gekennzeichnet, dass** der elektrische Energiespeicher (13) am Fahrzeug (2) während der zweiten Bewegungsphase (A2) vom Generator (10) geladen wird.

4. Verfahren nach einem der Ansprüche 1 bis 3, **dadurch gekennzeichnet, dass** zumindest ein elektrischer Verbraucher (11, 11') des Fahrzeugs (2) während des Aufenthalts des Fahrzeugs (2) in einer Station (3, 4) und/oder während der ersten Bewegungsphase (A1) ganz oder teilweise abgeschaltet wird.

5. Verfahren nach einem der Ansprüche 1 bis 4, **dadurch gekennzeichnet, dass** zumindest ein elektrischer Verbraucher (11') des Fahrzeugs (2) nur über den Generator (10) mit elektrischer Energie versorgt wird.

6. Verfahren nach einem der Ansprüche 1 bis 5, **dadurch gekennzeichnet, dass** zumindest zwei miteinander gekoppelte Fahrzeuge (2) bewegt werden und zumindest ein Verbraucher (11, 11') eines der beiden Fahrzeuge (2) vom jeweils anderen Fahrzeug (2) mit elektrischer Energie versorgt, wenn die Energieversorgung eines Fahrzeugs (2) ausfällt.

7. Verfahren nach einem der Ansprüche 1 bis 6, **dadurch gekennzeichnet, dass** die Verbraucher (11, 11') im Bereich einer zwischen der ersten Station (3) und zweiten Station (4) angeordneten dritten Station über die dritte Station mit elektrischer Energie versorgt werden.

8. Beförderungseinrichtung mit zumindest einem Fahrzeug (2), das mit einem angetriebenen Seil (5) der Beförderungseinrichtung (1) gekoppelt ist, um das Fahrzeug (2) zwischen einer ersten Station (3) und einer zweiten Station (4) zu befördern, wobei am Fahrzeug (2) zumindest ein Generator (10) vorgesehen ist, der während der Bewegung des Fahrzeuges (2) elektrische Energie zum Versorgen von elektrischen Verbrauchern (11, 11') des Fahrzeuges (2) erzeugt, **dadurch gekennzeichnet, dass** am Fahrzeug (2) ein elektrischer Energiespeicher (13) vorgesehen ist und der elektrische Energiespeicher (13) oder der elektrische Energiespeicher (13) gemeinsam mit dem Generator (10) die elektrischen Verbraucher (11) des Fahrzeugs (2) mit elektrischer Energie versorgt während das Fahrzeug (2) aus einer Station (3, 4) auf eine Grenzgeschwindigkeit beschleunigt oder umgekehrt von einer Grenzgeschwindigkeit in eine Station (3, 4) verzögert **und dass** der Generator (10) allein die elektrischen Verbraucher (11, 11') des Fahrzeugs (2) während der Bewegung mit einer Geschwindigkeit größer als der Grenzgeschwindigkeit mit elektrischer Energie versorgt.

9. Beförderungseinrichtung nach Anspruch 8, **dadurch gekennzeichnet, dass** der zumindest eine Generator (10) als ein in beiden Richtungen betreibbarer Generator ausgeführt ist.

10. Beförderungseinrichtung nach Anspruch 8 oder 9, **dadurch gekennzeichnet, dass** im Fahrzeug (2) ein elektrisches Bordnetz (12) vorgesehen ist, das mit dem elektrischen Energiespeicher (13) und mit dem Generator (10) verbunden ist.

11. Beförderungseinrichtung nach einem der Ansprüche 8 bis 10, **dadurch gekennzeichnet, dass** in einer Station (3, 4) ein elektrisch versorgter stationärer Leiter (15) vorgesehen ist, und am Fahrzeug (2) ein Stromabnehmer (16) vorgesehen ist, der den stationären Leiter (15) in der Station (3, 4) kontaktiert **und dass** der Stromabnehmer (16) mit einem Ladegerät (14) zum Laden des elektrischen Energiespeichers (13) verbunden ist.

12. Beförderungseinrichtung nach Anspruch 11, **dadurch gekennzeichnet, dass** das Ladegerät (14) mit dem Bordnetz (12) verbunden ist.

13. Beförderungseinrichtung nach einem der Ansprüche 10 bis 12, **dadurch gekennzeichnet, dass** die Beförderungseinrichtung (1) zwei miteinander gekoppelte Fahrzeuge (2) befördert, wobei die Bordnetze (12) der beiden Fahrzeuge (2) über einen Hilfsversorgungsbus (26) miteinander verbunden sind.

## Claims

1. A method for operating a cable-drawn transportation device (1), by means of which the at least one vehicle (2) that is coupled to a driven cable (5) of the transportation device (1) is moved between a first station (3) and a second station (4), whereby at least one generator (10), which generates electrical energy while the vehicle (2) is moving, being arranged on the vehicle (2) in order to supply power to electrical loads (11, 11') of the vehicle (2), **characterized in that** the electrical loads (11) of the vehicle (2) are supplied with power outside a station (3, 4) by an electrical energy store (13) of the vehicle (2) or by both an electrical energy store (13) of the vehicle (2) and the generator (10) during a first movement phase (A1, A3), in which the vehicle (2) is accelerated to a limit speed out of the station (3, 4), or, conversely, is decelerated from a limit speed into the station (3, 4), **and in that,** in a subsequent or previous second movement phase (A2) when the vehicle (2) is moving at a speed that is greater than the limit speed, the electrical loads (11) of the vehicle (2) are supplied with electrical energy by the generator (10) only.

2. The method according to claim 1, **characterized in that** the electrical energy store (13) on the vehicle (2) is charged in a station (3, 4) by a charging device (20) that is supplied with electricity by the station (3, 4).

3. The method according to claim 1 or claim 2, **characterized in that** the electrical energy store (13) on the vehicle (2) is charged by the generator (10) during the second movement phase (A2).

4. The method according to one of claims 1 to 3, **characterized in that** at least one electrical load (11, 11') of the vehicle (2) is switched off, either fully or in part, whilst the vehicle (2) makes a stop in a station (3, 4) and/or during the first movement phase (A1).

5. The method according to one of claims 1 to 4, **characterized in that** at least one electrical load (11') of the vehicle (2) is supplied with electrical energy only by means of the generator (10).

6. The method according to one of claims 1 to 5, **characterized in that** at least two vehicles (2), which are coupled to one another, are moved and at least one load (11, 11') of one of the two vehicles (2) is supplied with electrical energy by the other vehicle (2) if the energy supply to one vehicle (2) cuts out.

7. The method according to one of claims 1 to 6, **characterized in that,** in the region of a third station that is arranged between the first station (3) and the second station (4), the loads (11, 11') are supplied with electrical energy by means of the third station.

8. A transportation device comprising at least one vehicle (2), which is coupled to a driven cable (5) of the transportation device (1), for transporting the vehicle (2) between a first station (3) and a second station (4), whereby at least one generator (10) being provided on the vehicle (2), which generates electrical energy while the vehicle (2) is moving in order to supply power to electrical loads (11, 11') of the vehicle (2), **characterized in that** an electrical energy store (13) is provided on the vehicle (2) and the electrical energy store (13) or the electrical energy store (13) together with the generator (10) supplies the electrical loads (11) of the vehicle (2) with electrical energy when the vehicle (2) is accelerated to a limit speed out of a station (3, 4) or, conversely, is decelerated from a limit speed into a station (3, 4), **and in that** only the generator (10) supplies electrical energy to the electrical loads (11, 11') of the vehicle (2) while said vehicle moves at a speed that is greater than the limit speed.

9. The transportation device according to claim 8, **characterized in that** the at least one generator (10) is as a generator that can be operated in both directions.

10. The transportation device according to claim 8 or 9, **characterized in that** an on-board electrical system (12) is provided in the vehicle (2) which is connected to the electrical energy store (13) and to the generator (10).

11. The transportation device according to one of claims 8 to 10, **characterized in that** a stationary conductor (15) that is supplied with electricity is provided in a station (3, 4), and a current collector (16) that makes contact with the stationary conductor (15) in the station (3, 4) is provided on the vehicle (2), **and in that** the current collector (16) is connected to a charger (14) for charging the electrical energy store (13).

12. The transportation device according to claim 11, **characterized in that** the charger (14) is connected to the on-board electrical system (12).

13. The transportation device according to one of claims 10 to 12, **characterized in that** the transportation device (1) moves two vehicles (2) that are coupled to one another, whereby the on-board electrical systems (12) of the two vehicles (2) being connected to one another by means of an auxiliary power supply bus (26).

## Revendications

1. Procédé de fonctionnement d'un système de transport (1) à traction par câble à l'aide duquel au moins un véhicule (2) accouplé à un câble entraîné (5) du système de transport (1) est déplacé entre une première station (3) et une deuxième station (4), dans lequel au moins un générateur (10) est disposé au niveau du véhicule (2), lequel générateur produit de l'énergie électrique pour alimenter les consommateurs électriques (11, 11') du véhicule (2) pendant le déplacement du véhicule (2), **caractérisé en ce que** les consommateurs électriques (11) du véhicule (2) sont alimentés par un accumulateur d'énergie électrique (13) du véhicule (2) ou conjointement par un accumulateur d'énergie électrique (13) du véhicule (2) et par le générateur (10) en dehors d'une station (3, 4) pendant une première phase de déplacement (A1, A3), dans laquelle le véhicule (2) est accéléré de la station (3, 4) à une vitesse limite ou, inversement, décéléré d'une vitesse limite dans la station (3, 4), **et en ce que** les consommateurs électriques (11) du véhicule (2) sont alimentés en énergie électrique par le seul générateur (10), dans une seconde phase de déplacement (A2) ultérieure ou précédente pendant le déplacement du véhicule (2) à une vitesse supérieure à la vitesse limite.

2. Procédé selon la revendication 1, **caractérisé en ce que** l'accumulateur d'énergie électrique (13) au niveau du véhicule (2) est chargé dans une station (3, 4) par un dispositif de charge (20) alimenté électriquement par la station (3, 4).

3. Procédé selon la revendication 1 ou 2, **caractérisé en ce que** l'accumulateur d'énergie électrique (13) au niveau du véhicule (2) est chargé par le générateur (10) pendant la seconde phase de déplacement (A2).

4. Procédé selon l'une des revendications 1 à 3, **caractérisé en ce qu'**au moins un consommateur électrique (11, 11') du véhicule (2) est totalement ou partiellement mis hors tension pendant le séjour du véhicule (2) dans une station (3, 4) et/ou pendant la première phase de déplacement (A1).

5. Procédé selon l'une des revendications 1 à 4, **caractérisé en ce qu'**au moins un consommateur électrique (11') du véhicule (2) est alimenté en énergie électrique uniquement par l'intermédiaire du générateur (10).

6. Procédé selon l'une des revendications 1 à 5, **caractérisé en ce qu'**au moins deux véhicules (2) accouplés sont déplacés et **en ce qu'**au moins un consommateur (11, 11') alimente l'un des deux véhicules (2) en énergie électrique à partir de l'autre véhicule (2) respectif si l'alimentation en énergie d'un véhicule (2) fait défaut.

7. Procédé selon l'une des revendications 1 à 6, **caractérisé en ce que** dans la zone d'une troisième station disposée entre la première station (3) et la deuxième station (4), les consommateurs (11, 11') sont alimentés en énergie électrique par la troisième station.

8. Système de transport comportant au moins un véhicule (2) accouplé à un câble de traction (5) du système de transport (1) pour transporter le véhicule (2) entre une première station (3) et une deuxième station (4), dans lequel au moins un générateur (10) est prévu au niveau du véhicule (2), lequel générateur produit de l'énergie électrique pour alimenter les consommateurs électriques (11, 11') du véhicule (2) pendant le déplacement du véhicule (2), **caractérisé en ce que** qu'un accumulateur d'énergie électrique (13) est prévu au niveau du véhicule (2) **et en ce que** l'accumulateur d'énergie électrique (13), ou l'accumulateur d'énergie électrique (13) conjointement avec le générateur (10), alimente(nt) les consommateurs électriques (11) du véhicule (2) en énergie électrique pendant que le véhicule (2) est accéléré d'une station (3, 4) à une vitesse limite, ou inversement, décéléré d'une vitesse limite dans une station (3, 4) **et en ce que** le générateur (10) alimente seul les consommateurs électriques (11, 11') du véhicule (2) en énergie électrique pendant le déplacement à une vitesse supérieure à la vitesse limite.

9. Système de transport selon la revendication 8, **caractérisé en ce que** l'au moins un générateur (10) est réalisé sous la forme d'un générateur pouvant fonctionner dans les deux sens.

10. Système de transport selon la revendication 8 ou 9, **caractérisé en ce qu'un** réseau de bord électrique (12) est prévu dans le véhicule (2), lequel réseau de bord est relié à l'accumulateur d'énergie électrique (13) et au générateur (10).

11. Système de transport selon l'une des revendications 8 à 10, **caractérisé en ce qu'un** conducteur fixe (15) alimenté électriquement est prévu dans une station (3, 4) **et en ce qu'**un captage de courant (16) est prévu au niveau du véhicule (2), lequel captage de courant est en contact avec le conducteur fixe (15) dans la station (3, 4), **et en ce que** le captage de courant (16) est relié à un chargeur (14) pour charger l'accumulateur d'énergie électrique (13).

12. Système de transport selon la revendication 11, **caractérisé en ce que** le chargeur (14) est relié au réseau de bord (12).

13. Système de transport selon l'une des revendications 10 à 12, **caractérisé en ce que** le système de transport (1) transporte deux véhicules (2) accouplés, dans lequel les réseaux de bord (12) des deux véhicules (2) sont reliés par un bus d'alimentation auxiliaire (26).
